# EUROPEAN PATENT SPECIFICATION

(11) **EP 2 343 233 B1**
(45) Date of publication and mention of the grant of the patent: **11.12.2013**
(21) Application number: 10186976.6
(22) Date of filing: 08.10.2010
(51) Int. Cl.: B62J 6/02, B60Q 1/00, B62J 6/00, B62J 17/02

(54) **saddle-riding type vehicle with front lighting apparatus structure**
Sattelfahrzeuge mit Frontbeleuchtungsstruktur
Véhicule de type à enfourcher muni d'une structure d'éclairage avant

(30) Priority: 26.11.2009 JP 2009268779
(43) Date of publication of application: 13.07.2011
(73) Proprietor: Honda Motor Co., Ltd., Minato-ku Tokyo 107-8556 (JP)
(72) Inventor: Ochiai, Kazuyuki, Wako-shi Tokyo 351-0193 (JP); Ashihara, Eiji, Wako-shi Saitama 351-0193 (JP)
(74) Representative: Beder, Jens

(56) References cited:
- EP-A1- 2 138 390
- EP-A2- 1 908 630
- DE-A1-102006 041 547

## Description

The present invention relates to a saddle-riding type vehicle with a front lighting apparatus structure. Document DE-A-10 2006 041 547 discloses a saddle-riding type vehicle according to the preamble of claim 1.
A known front lighting apparatus structure includes a front lighting apparatus, such as a front flasher and a front position lamp, disposed on a side portion of a front cowl of a motorcycle (see, for example, Patent Documents 1 to 3).
[Patent Document 1]
   Japanese Patent Laid-open No. 2002-205596
[Patent Document 2]
   Japanese Patent Laid-open No. 2007-083894
[Patent Document 3]
   Japanese Patent JP-A-2005 14 52 02
EP 1 908 630 A2 further discloses a headlight unit that includes a flasher bulb that flashes at predetermined intervals, and a flasher lens. The headlight unit has a louver that partitions the flasher lens. The louver is disposed on an inner surface of the flasher lens.
EP 2 138 390 A1 discloses a lamp and motorcycle, wherein a lamp includes a pair of right and left flasher units and a connecting unit. Each of the pair of right and left flasher units has a shape longer vertically than horizontally in a front view and/or longer longitudinally than horizontally in a top view. The connecting unit has a bent shape in the front view and/or the top view and connects the flasher units to each other. Accordingly, it is possible to improve the visibility of the flasher units and to suppress deterioration in rigidity of the lamp.

The front flasher flashes off and on only on one side and is not therefore required to be visible on the opposite side. The front position lamp is, however, required to turn on simultaneously on the right and left sides. The position lamps on both right and left sides should be adapted to be visible, even when the motorcycle is viewed from a forward, obliquely upward direction on one side (near a viewpoint of a third person).
If front position lamps are disposed downwardly and rearwardly of a front portion of the front cowl, however, the front portion of the front cowl may obstruct light from the front position lamp on a first side when a second side of the motorcycle is viewed from a front, obliquely upward direction, if the front cowl is disposed near the front position lamps.

It is therefore an object of the present invention to improve, in a front lighting apparatus structure for a saddle-riding type vehicle, conspicuity of the front lighting apparatus by inhibiting light from a front position light from being less visible by a front portion of a front cowl.

As means for solving the foregoing problem, claim 1 of the present invention provides a front lighting apparatus structure for a saddle-riding type vehicle, the vehicle including: an engine (17); a fuel tank (31) disposed upwardly of the engine (17); a handlebar (7); a front cowl (34) for covering forwardly of the handlebar (7); a headlight (35) disposed at a front end of the front cowl (34); and a front flasher (36) disposed downwardly of the headlight (35) and on a side portion of the front cowl (34). The front lighting apparatus structure is characterized in that the front flasher (36) is disposed between the headlight (35) and the fuel tank (31) in a side view and the front flasher (36) includes a flasher bulb (71) and a position light bulb (72) disposed vertically, the position light bulb (72) being disposed downwardly of the flasher bulb (71).
It is to be noted that the saddle-riding type vehicle refers to general types of vehicles, in which a rider straddle the vehicle body, including not only motorcycles (including motorized bicycles and scooter type vehicles), but also three-wheel (including vehicles with front one wheel and rear two wheels, and front two wheels and rear one wheel) or four-wheel vehicles.
According to claim 2 of the present invention, the front flasher (36) is disposed at a front edge of the side portion of the front cowl (34) at a position at which the front flasher (36) crosses a front fork (3) in a side view.
According to claim 3 of the present invention, the flasher bulb (71) and the position light bulb (72) are disposed rearwardly of the front fork (3).
According to claim 4 of the present invention, the front flasher (36) has an upper portion thereof extended up to a position near a rear portion of the headlight (35) and a lower portion thereof extended up to a position near an upper portion of a radiator (24) forwardly of the fuel tank (31).
According to claim 5 of the present invention, the lower portion of the front flasher (36) overlaps a side portion of the radiator (24) in a front view.
According to claim 6 of the present invention, the headlight (35) has an air duct (49) disposed at a lower portion thereof and the front flasher (36) is disposed rearwardly of the air duct (49).
According to claim 7 of the present invention, the front flasher (36) has partition walls (57, 58) that separate an interior of the front flasher (36) into an upper chamber (59a), a middle chamber (59b), and a lower chamber (59c) and the flasher bulb (71) is disposed in the middle chamber (59b) and the position light bulb (72) is disposed in the lower chamber (59c).
According to claim 8 of the present invention, the upper chamber (59a) has a vent port (54d) that provides communication with an outside.
According to claim 9 of the present invention, the front flasher (36) includes a lens (61), a side portion outer periphery (63) of which has an inner surface coated with dual painting, silver on an inner surface side and black on an outer surface side.
According to claim 10 of the present invention, the front flasher (36) includes a middle reflector (55) that has a step (73) disposed on an upper portion rear surface side of the middle reflector (55), the step (73) being downwardly inclined toward a side of the middle reflector (55), water on the upper portion rear surface being drained through the step (73).
According to claim 11 of the present invention, the front flasher (36) includes a lower reflector (56) that has a lower reflecting surface (57a) extending upwardly toward a front from an upper portion of the lower reflector (56).
According to claim 12 of the present invention, the front flasher (36) includes a housing (51) that has a cable guide (82) for holding a flasher cable (81).
According to claim 13 of the present invention, the cable guide (82) includes an upper U-shaped groove (84) and a lower U-shaped groove (83) and the flasher cable (81) is guided by being passed between the upper U-shaped groove (84) and the lower U-shaped groove (83).

### [Effects of the Invention]

According to claim 1 of the present invention, light emitted from the front flasher that is disposed downwardly and rearwardly of the headlight at the front end of the front cowl and the front position light that is continuous downwardly with the front flasher is inhibited from being less visible by the front cowl and is easily visible for the improved conspicuity of the front lighting apparatus. The arrangement in which the front position light is disposed downwardly of the front flasher, in particular, helps make the front position light more easily visible.
According to claim 2 of the present invention, the front flasher and the front position light are illuminated at a front edge of the side portion of the front cowl, which even further enhances conspicuity of the front lighting apparatus.
According to claim 3 of the present invention, each of the bulbs is disposed rearwardly of the front fork. This allows the bulbs to be spaced apart from a front end of the front cowl. As a result, light from each bulb is less likely to be hidden by the front cowl, so that a degree of freedom in layout of the front lighting apparatus can be enhanced and conspicuity can be improved.
According to claim 4 of the present invention, the front flasher can be built as large as possible to thereby enhance conspicuity of the front flasher.
According to claim 5 of the present invention, the front flasher does not protrude outwardly toward the side relative to the radiator, which allows a vehicle body width to be narrower. Additionally, a large front flasher can be disposed by making effective use of a dead space between an upper portion of the radiator and the front cowl.
According to claim 6 of the present invention, the front flasher can be cooled by an air flow introduced into an inside of the front cowl through the air duct. The air duct does not impair conspicuity of the front flasher, either.
According to claim 7 of the present invention, the front flasher can be built large vertically for greater conspicuity. The arrangements in which the flasher bulb is disposed in the middle chamber and the position light bulb is disposed in the lower chamber, respectively, allows a sufficient gap between the corresponding bulb and the headlight, so that conspicuity of the front flasher and the front position light can be enhanced.
According to claim 8 of the present invention, heat from each bulb moves upwardly, so that heat accumulated in the upper chamber can be effectively discharged for improved cooling performance.
According to claim 9 of the present invention, light from each bulb can be prevented from leaking from the side portion outer periphery of the lens, while the bulb's light is reflected into the lamp case, which allows the lens surface to be illuminated efficiently.
According to claim 10 of the present invention, even with the middle reflector inclined downwardly toward a front, water on the upper portion rear surface can be drained properly through the step.
According to claim 11 of the present invention, the front flasher can have a large reflecting surface, while the front position light is allowed to have an illuminating surface, so that a large illuminating area can be achieved of the front flasher.
According to claims 12 and 13 of the present invention, the flasher cable can be held in position by a simple structure, so that the front flasher can be easily removed or reinstalled.
Fig. 1 is a left side elevational view showing a motorcycle according to an embodiment of the present invention.
Fig. 2 is a front elevational view showing areas around a front cowl of the motorcycle according to the embodiment of the present invention.
Fig. 3 is a right side elevational view showing a vehicle body front portion of the motorcycle according to the embodiment of the present invention from which the front cowl and associated parts are removed.
Fig. 4 is a right side elevational view showing a right front flasher of the motorcycle according to the embodiment of the present invention.
Fig. 5 is a rear elevational view showing the right front flasher extending along an axis thereof.
Fig. 6 is a cross-sectional view taken along line A-A of Fig. 5.
Fig. 7 is a top plan view showing the right front flasher.
Fig. 8 is a left side elevational view showing the right front flasher.
Fig. 9 is a perspective view showing the right front flasher as viewed from a left upper rearward direction.

A specific embodiment to which the present invention is applied will be described below with reference to the accompanying drawings. Throughout the descriptions given hereunder, expressions indicating directions including front and rear, and right and left, mean the same directions as those in a vehicle unless otherwise specified. In the drawings, an arrow FR indicates forward of the vehicle, an arrow LH indicates leftward of the vehicle, an arrow RH indicates rightward of the vehicle, and an arrow UP indicates upward of the vehicle.

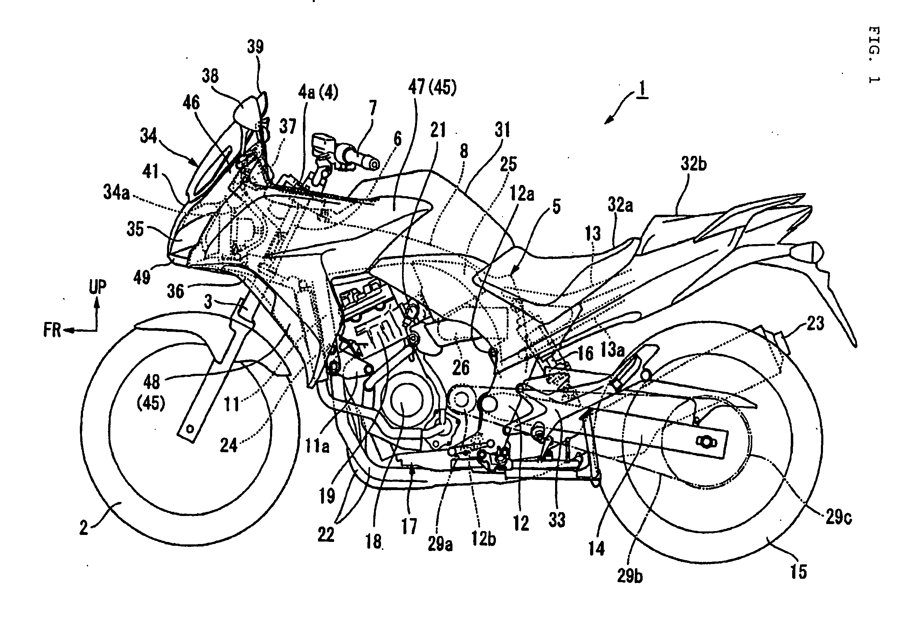

Referring to Fig. 1, a motorcycle (saddle-riding type vehicle) 1 includes a front wheel 2 that is journaled at lower end portions of a pair of left and right front forks 3. Each of the front forks 3 has an upper portion pivoted steerably by a head pipe 6 of a vehicle body frame 5 via a steering stem 4. A handlebar 7 is mounted on top of a top bridge 4a of the steering stem 4.

The vehicle body frame 5 is formed by integrally joining together steels of various kinds (or cast moldings) through, for example, welding. The vehicle body frame 5 is a so-called mono-backbone type mainly including a main frame 8 that extends rearwardly from an upper portion of the head pipe 6 and then curves downwardly. The main frame 8 is disposed centrally in a vehicle width direction (crosswise direction) as with the head pipe 6.

A pair of left and right engine hangers 11 extends from an immediately rearward portion of the head pipe 6, the engine hangers 11 being inclined downwardly so as to be spaced apart from each other.
A pair of left and right pivot brackets 12 is attached to a lower side at a rear portion of the main frame 8, while a seat rail 13 and a front end portion of a support pipe 13a for the seat rail 13 are mounted on an upper side at the rear portion of the main frame 8.

A swing arm 14 has a front end portion swingably pivoted at each of the pivot brackets 12. The swing arm 14 has a rear end portion at which a rear wheel 15 is journaled. A rear cushion 16 is disposed between a front portion of the swing arm 14 and the curved portion of the main frame 8.

A parallel four-cylinder engine (internal combustion engine) 17 that has a crank rotating axis extending along the vehicle width direction is disposed downwardly of the main frame 8. The engine 17 includes a cylinder 19 disposed on a crankcase 18. The cylinder 19 is arranged in a standing condition so as to face obliquely upwardly toward the front. The cylinder 19 includes a rear portion to which a throttle body 21 is connected for each cylinder. The cylinder 19 further includes a front portion to which an exhaust pipe 22 is connected for each cylinder.

An air cleaner case 25 is connected rearwardly of the throttle body 21. In Fig. 1, reference numeral 26 denotes an intake duct that is disposed so as to extend along a left side portion of the air cleaner case 25 and opens rearwardly of the vehicle.

The exhaust pipes 22 suitable curve in an area forward of the engine 17 to reach an area downward of the crankcase 18. The exhaust pipes 22 then merge together into a single pipe to incorporate therein, for example, an exhaust catalyst and connect to a silencer 23 disposed on the right side at the rear portion of the vehicle. A radiator 24 for cooling the engine 17 is disposed forwardly of the cylinder 19.

The crankcase 18 has an upper side of its front portion supported by a support plate 11a at a lower portion of each engine hanger 11. In addition, the crankcase 18 has upper and lower sides of its rear portion supported by upper and lower support portions 12a, 12b, respectively, near the pivot brackets 12.

A rotative driving force of the engine 17 is outputted to a drive sprocket 29a on the left side of a rear portion of the crankcase 18 via a clutch mechanism and a transmission not shown. The rotative driving force is then transmitted to the rear wheel 15 via a drive chain 29b and a driven sprocket 29c.

A fuel tank 31 is disposed upwardly of the engine 17 so as to straddle the main frame 8. A rider's seat 32a and a rear passenger's seat 32b supported by the seat rail 13 are disposed in tandem rearwardly of the fuel tank 31. A step bracket 33 that longitudinally supports a rider's step and a rear passenger's step has a front end portion attached to a rear portion of the pivot bracket 12.

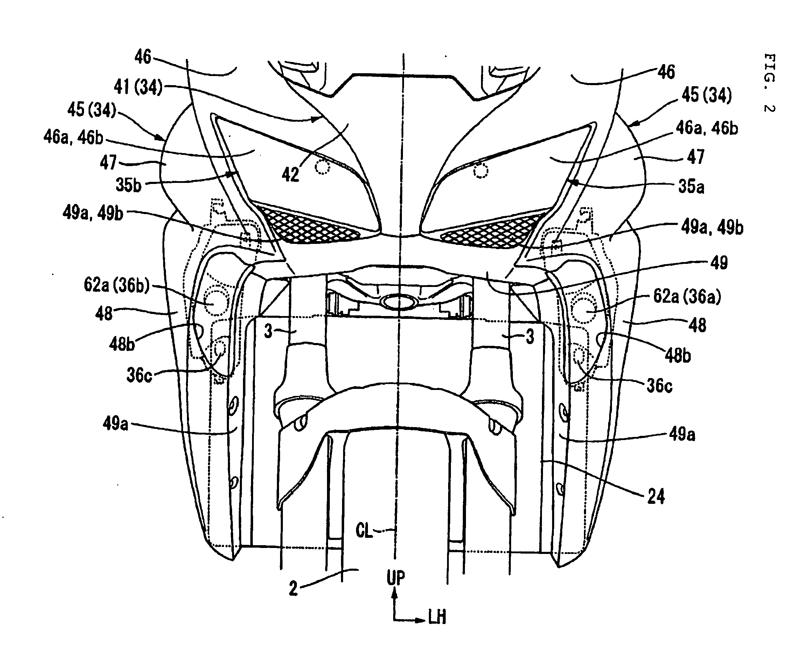

Referring also to Fig. 2, a front cowl 34 is disposed at the front portion of the vehicle body. The front cowl 34 covers areas around the head pipe 6 from a forward direction to both sides. The front cowl 34 is formed of a synthetic resin and forms a forwardly-downward nose shape at an upper side at a front end portion of the vehicle body. The front cowl 34 mainly includes a front center cowl 41 and left and right front side cowls 45. Specifically, the front center cowl 41 forms a crosswise central portion at the upper side of the front end portion of the vehicle body. The left and right front side cowls 45 form left and right side portions of the front portion of the vehicle body. A front screen 39 formed of a transparent or translucent synthetic resin is disposed at a front side of an upper portion of the front center cowl 41. In Fig. 2, a line CL denotes a vehicle body crosswise centerline.

A headlight 35 of a left and right two-lamp system is disposed at a front end portion of the front cowl 34. A front flasher 36 is disposed at each of upper portions of front edges that are inclined upwardly toward the front in a side view in downward extensions 48 of the left and right front side cowls 45. A meter unit 37 that has displays of various types is disposed at an inside of an upper portion of the front cowl 34. A rearview mirror 38 is disposed at either side of the upper portion of the front cowl 34. In the following, the headlight 35 on the left-hand side may be identified by reference numeral 35a and that on the right-hand side by reference numeral 35b. Similarly, the front flasher 36 on the left-hand side may be identified by reference numeral 36a and that on the right-hand side by reference numeral 36b.

The front center cowl 41 integrally includes an outer surface forming portion 42 and left and right covering portions (not shown). Specifically, the outer surface forming portion 42 extends upwardly from a gap portion between the left and right headlights 35a, 35b so as to be wider at greater distances from a bottom thereof. The left and right covering portions extend to curve obliquely rearwardly toward the outside from either side of the outer surface forming portion 42. The outer surface forming portion 42 forms an appearance surface that has an outwardly (obliquely upwardly and forwardly) convex curve at an upper portion front surface of the front cowl 34. The left and right covering portions are covered with front surface portions 46 of the front side cowls 45, as the front surface portions 46 overlap the left and right covering portions from obliquely forward outer sides.

Each of the front side cowls 45 includes the front surface portion 46, a rearward extension 47, and the downward extension 48. Specifically, the front surface portion 46 is disposed so as to be continuous outwardly with either side of the outer surface forming portion 42 of the front center cowl 41. The rearward extension 47 extends rearwardly from an outer edge of the front surface portion 46. The downward extension 48 extends downwardly from a lower edge of a longitudinal intermediate portion of the rearward extension 47. Each of the left and right front surface portions 46 has a cutout 46a having an arched, substantially rectangular shape in a front view so as to be aligned with an upper edge and an outer edge of a lens surface of a corresponding one of the left and right headlights 35a, 35b.

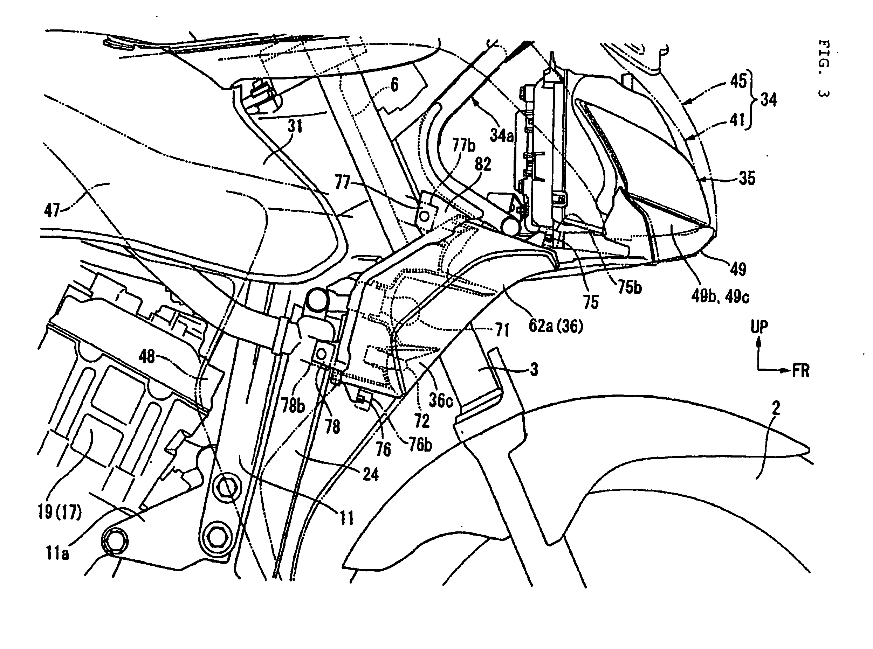

Reference is now made also to Fig. 3. The rearward extension 47 extends rearwardly so as to cover an upper portion of the front fork 3 and a front portion of the fuel tank 31 from an outside in the vehicle width direction. The downward extension 48 extends downwardly so as to cover the radiator 24 disposed rearwardly of a lower portion of the front fork 3 from the outside in the vehicle width direction. The radiator 24 is disposed immediately before the engine hangers 11. The radiator 24 is inclined in a side view so as to follow along the engine hangers 11 such that lower portions thereof are disposed more rearwardly than upper portions thereof.

A cowl extension 49 that extends across the cutouts 46a is disposed between lower portions of outer edges of the cutouts 46a. The crosswise central portion of the front center cowl 41 has a lower end connected from above to an upper surface of a crosswise central portion of the cowl extension 49. Both side edges of a lower portion of the crosswise central portion of the front center cowl 41, the cutouts 46a in the front surface portions 46, and upper edges of both side portions of the cowl extension 49 form opening portions 46b through which the lens surfaces of the left and right headlights 35a, 35b are exposed forwardly of the vehicle.

Cowl side inners 49a are disposed in a connected row arrangement on both sides of a lower portion of the cowl extension 49. The cowl side inners 49a extend downwardly so as to follow along front edges of the downward extensions 48 of the front side cowls 45 and function also as a radiator shroud (air intake guide).

Referring to Fig. 2, each of both side portions of the cowl extension 49 has an opening portion 49b formed therein. The opening portion 49b includes an upper edge, a lower edge, and an outer edge. Specifically, the upper edge of the opening portion 49b follows along a lower edge of the lens surface of the left or right headlight 35a or 35b. The lower edge of the opening portion 49b extends obliquely downwardly toward the outside from an inner end of the upper edge. The outer edge of the opening portion 49b extends obliquely upwardly toward the outside from an outer end of the lower edge to reach an outer end of the upper edge. The opening portion 49b thus opens to form a vertically shallow, inverted triangle in a front view. The cowl extension 49 thus arranged functions as a grille (air duct) that allows an air flow to be introduced into an inside of the front cowl 34. A mesh 49c is integrally formed in the opening portion 49b.

The front cowl 34 has a front portion thereof supported with the headlight 35, the front flasher 36, the rearview mirror 38, and the meter unit 37 by the head pipe 6 via a cowl stay 34a. In addition, the front cowl 34 has both side portions thereof suitably supported by, for example, the vehicle body frame 5 via, for example, a side frame not shown.

The front flasher 36 will be described below. In the description that follows, reference is made to the right front flasher 36b unless otherwise specified. It is to be understood that the left front flasher 36a has a symmetrical arrangement and a description thereof will be omitted.

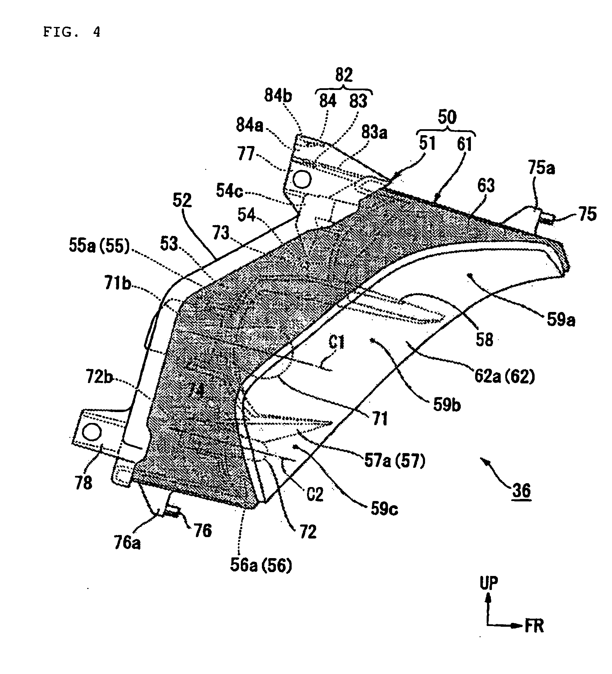

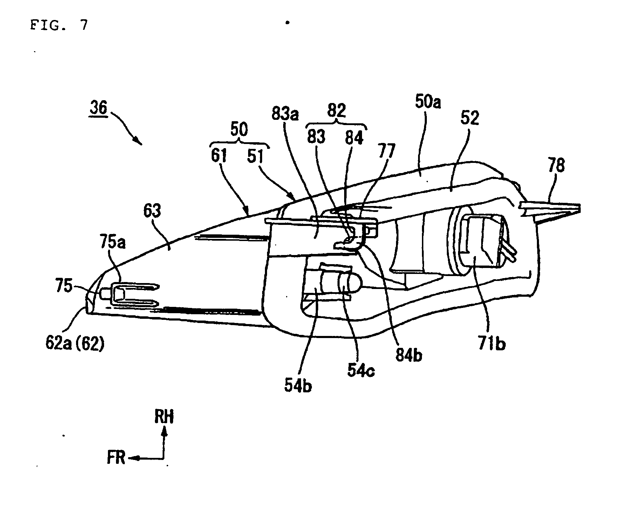

Referring to Figs. 4 to 8, the front flasher 36 includes a lamp case 50. The lamp case 50 integrates a housing main unit 51 and a lens body 61. A flasher bulb 71 that serves as a light source of the front flasher 36 and a position light bulb 72 that serves as a light source of a front position light 36c are vertically disposed inside the lamp case 50. In addition, a reflector (a middle reflector 55 and a lower reflector 56 to be described later) that reflects light from the flasher bulb 71 and the position light bulb 72 forwardly of the vehicle is integrally formed on a bottom portion of the housing main unit 51. Specifically, the front flasher 36 (flashing lighting apparatus) is configured as a combination light that integrates the front position light 36c (stay-lit lighting apparatus, auxiliary lighting apparatus) disposed downwardly thereof.

Referring also to Figs. 2 and 3, the front flasher 36 (lamp case 50) has a vertically long shape with a crosswise width kept smaller than a vertical width in a front view. The front flasher 36 is disposed in an inclined position to follow along the upper portion front edge of the downward extension 48 of the front side cowl 45. Specifically, the front flasher 36 is disposed in an inclined position such that an upper portion thereof is disposed inwardly in the vehicle width direction in a front view and forwardly in a side view. The upper portion of the front flasher 36 curves so as to be disposed more inwardly in the vehicle width direction at higher portions thereof in the front view and extends forwardly along the front portion lower edge of the rearward extension 47 (a front portion bottom surface of the front cowl 34) of the front side cowl in the side view. A flange 50a that prevents light from leaking through a gap from an inner surface of the front side cowl 45 is mounted in a standing condition on an outer surface of the lamp case 50 (housing main unit 51).

Referring to Figs. 4 to 8, the housing main unit 51 is made of an opaque resin to form a rear portion of the lamp case 50. The housing main unit 51 includes a fitting portion 52, an inner peripheral wall 53, an upper bottom wall 54, a middle bottom wall 55, and a lower bottom wall 56. Specifically, the fitting portion 52 is a frame-like part in which a rear end edge of the box-shaped lens body 61 that opens rearwardly fits. The inner peripheral wall 53 extends forwardly from an inner peripheral side of the fitting portion 52. Each of the upper bottom wall 54, the middle bottom wall 55, and the lower bottom wall 56 has a spherical shape formed on a leading end side (front end side) of the inner peripheral wall 53. The middle bottom wall 55 and the lower bottom wall 56 form, on front surfaces thereof, paraboloidal reflecting surfaces 55a, 55b having the flasher bulb 71 and the position light bulb 72, respectively, as centers. In the following, the middle bottom wall 55 and the lower bottom wall 56 may be referred to as the middle reflector and the lower reflector, respectively.

Referring to Figs. 4, 6, and 8, reference numerals C1 and C2 denote central axes of the flasher bulb 71 and the position light bulb 72, respectively. The central axes C1, C2 are also axes extending along light distribution directions of the reflecting surfaces 55a, 55b of the middle reflector 55 and the lower reflector 56, respectively. Each of the axes C1, C2 extends in parallel with each other and is inclined forwardly downwardly when the front flasher 36 is mounted in the vehicle.

The lower bottom wall 56 is smaller than the middle bottom wall 55. The lower bottom wall 56 has an upper portion cut obliquely at a portion thereof near an upper end of the position light bulb 72, so as to be disposed more downwardly at more outer positions in a front view. A lower bulkhead 57 that is inclined upwardly toward the front extends forwardly from an upper edge of the lower bottom wall 56. This enlarges a forward light distribution range (a light emitting area of the front position light 36c) by the lower bottom wall 56. In addition, an upper bulkhead 58 that extends substantially in parallel with the axes C1, C2 extends forwardly from an upper edge of the middle bottom wall 55.

Each of the upper and lower bulkheads 58, 57 has a front end that is close to an inner surface of a front wall 62 of the lens body 61. The upper and lower bulkheads 58, 57 define an upper chamber 59a, a middle chamber 59b, and a lower chamber 59c within an internal space (light bulb chamber) of the lamp case 50. The flasher bulb 71 is accommodated in the middle chamber 59b, while the position light bulb 72 is accommodated in the lower chamber 59c. Rear walls of the upper chamber 59a, the middle chamber 59b, and the lower chamber 59c are formed by the upper bottom wall 54, the middle bottom wall 55, and the lower bottom wall 56, respectively. In Figs. 4 to 8, reference numerals 71b, 72b denote bulb sockets for the flasher bulb 71 and the position light bulb 72, mounted on a rear surface side of the middle bottom wall 55 and the lower bottom wall 56, respectively.

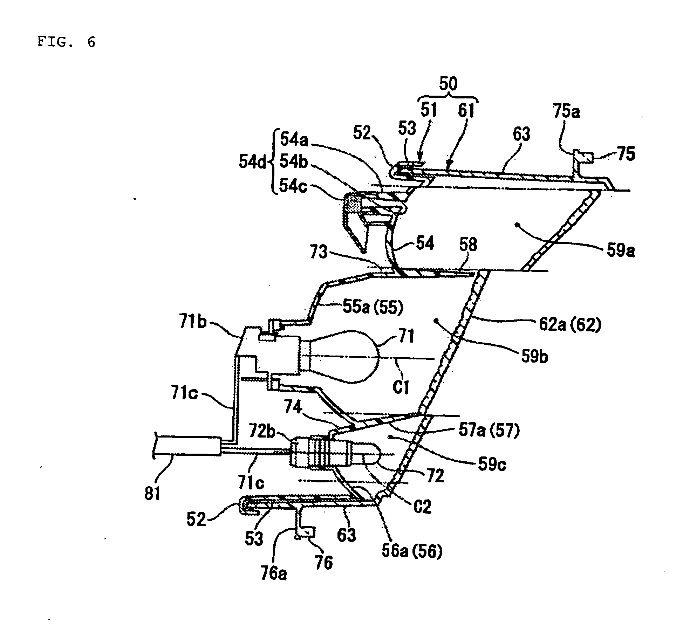

Referring to Fig. 6, the upper bottom wall 54 is displaced forwardly relative to the middle bottom wall 55 and the lower bottom wall 56 that are placed mutually vertically. The upper bottom wall 54 includes a vent aperture 54a. A vent nozzle 54b extends rearwardly of the vent aperture 54a. Further, a vent hose 54c that has a built-in dustproof filter and is bent downwardly to be open is connected to the vent nozzle 54b. The vent aperture 54a, the vent nozzle 54b, and the vent hose 54c form a vent port 54d of the upper chamber 59a, or for that matter, the lamp case 50. Specifically, the upper chamber 59a has no light source and serves as a vent chamber having the vent port 54d.

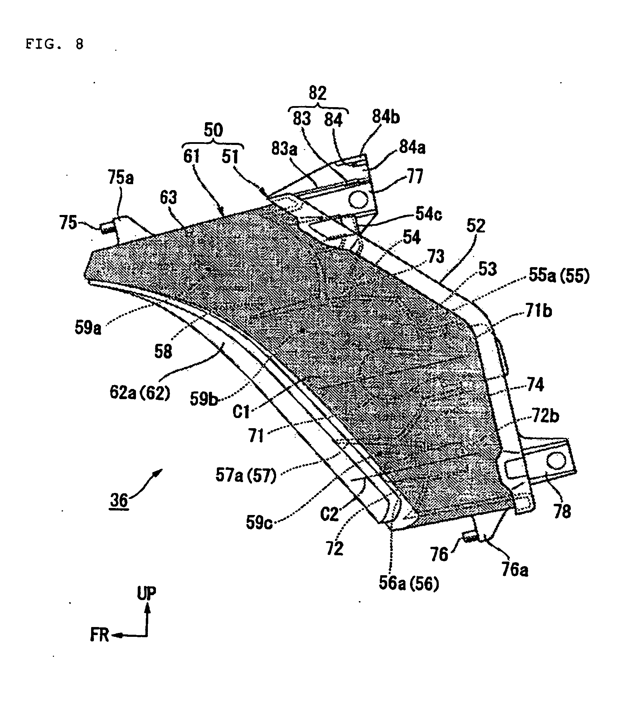

Referring to Figs. 4 to 8, the lens body 61 is integrally joined to the housing main unit 51 from a forward direction.
The lens body 61 is formed of a transparent or translucent resin. The lens body 61 includes the front wall 62 and an outer peripheral wall 63. Specifically, the front wall 62 has the same vertically long shape as the lamp case 50 in a front view. The outer peripheral wall 63 extends rearwardly from an outer peripheral edge of the front wall 62 so as to follow along the axes C1, C2. The outer peripheral wall 63 has a rear edge that is V-shaped to protrude only shallowly in an obliquely upward and rearward direction in a side view. The rear edge fits into the fitting portion 52 of the housing main unit 51 from a forward direction to thereby achieve a watertight joint. The inner peripheral wall 53 of the housing main unit 51 extends forwardly along the outer peripheral wall 63 of the lens body 61 and the axes C1, C2. Halftone areas in Figs. 4 and 8 indicate the outer peripheral wall 63.

Aluminum vapor deposition is applied to the front surface side of the housing main unit 51 to form the reflecting surfaces of light from the flasher bulb 71 and the position light bulb 72 and to enhance appearance as viewed across the lens body 61. A lower surface of the lower bulkhead 57 may hereinafter be referred to as a lower reflecting surface 57a.

A lens surface 62a that has the same front view shape as that of the front wall 62 bulges in a stepped fashion from a front surface of the front wall 62. The front side cowl 45 has an opening portion 48b formed in an upper portion front edge thereof. The opening portion 48b has the same vertically long shape as the front wall 62 of the lens body 61 in a front view (see Figs. 2 and 3). The lens surface 62a is guided into an inside of the opening portion 48b from an inside of the front cowl 34 and aligned with the opening portion 48b. In this condition, the lens surface 62a is exposed forwardly of the vehicle (outside the cowl) and substantially flush with an outer surface of the front side cowl 45 to form part thereof.

The arrangement in which the lens surface 62a of the vertically long front flasher 36 is integrated into the upper portion front edge of the front side cowl 45 permits formation of a novel appearance and improved conspicuity. Except for the lens surface 62a, the lamp case 50 (front flasher 36) is recessed in the front side cowl 45.

The lens surface 62a forms a rearwardly opening U-shaped cross section to extend vertically along the upper portion front edge of the downward extension 48 of the front side cowl 45. A side portion of the lens surface 62a on the outside in the vehicle width direction is adapted to have a wider longitudinal width than a side portion of the lens surface 62a on the inside in the vehicle width direction. Specifically, the lens surface 62a (front flasher 36) has a larger light emitting area on the outside in the vehicle width direction than on the inside in the vehicle width direction.

As mentioned earlier, the upper chamber 59a is adapted to serve as a vent chamber that does not emit any light directly. This is done to, for one thing, inhibit light from the headlight 35 from being fused with light from the front flasher 36 and the front position light 36c to be viewed as a single light by having the headlight 35 spaced apart from the front flasher 36 and the front position light 36c and, for another, inhibit light from the front flasher 36 and the front position light 36c from being hidden by using the front cowl 34 that bulges forwardly of the vehicle from a position near the upper end of the front flasher 36. In addition, the arrangements, in which the axes C1, C2 of the flasher bulb 71 and position light bulb 72 and the light distribution direction of each of the middle reflector 55 and the lower reflector 56 are forwardly downward, also help make the light from the front flasher 36 and the front position light 36c less easy to be fused with the light from the headlight 35.

Referring to Fig. 3, the front flasher 36 (lens surface 62a) has the upper portion front end side thereof extended forwardly so as to follow along the front portion lower edge of the rearward extension 47 of the front side cowl 45 (front portion lower surface of the front cowl 34) in a side view, thus reaching a position near the rear end of the headlight 35 in the side view. The front flasher 36 (lens surface 62a) has, on the other hand, the lower end side thereof extended obliquely downwardly along the upper portion front edge of the downward extension 48 of the front side cowl 45 in the side view, thus reaching a position at which the lower end side overlaps in the vertical direction an upper portion of the radiator 24 in the side view. This makes the front flasher 36 (lens surface 62a) even longer vertically, emphasizing presence thereof. Moreover, the front flasher 36 can be made larger in size by making effective use of a dead space between the upper portion of the radiator 24 and the front cowl 34.

Referring also to Fig. 2, the lower portion of the front flasher 36 partly overlaps a side portion of the radiator 24 that is disposed rearwardly thereof in a front view. Specifically, the side portion of the radiator 24 is disposed inside the downward extension 48 of the front side cowl 45, so that the lower portion of the front flasher 36 partly overlaps the side portion of the radiator 24 at a position of the side portion of the radiator 24 in the front view.
In addition, the front flasher 36 is disposed rearwardly of the opening portion 49b of the cowl extension 49 in a side view, so that an air flow introduced through the opening portion 49b into the front cowl 34 cools the front flasher 36.

The outer peripheral wall 63 of the lens body 61 (the halftone areas in Figs. 4 and 8) has an inner surface coated with opaque dual painting, black on the outer surface side and silver on the inner surface side. This eliminates the likelihood that light from each of the flasher bulb 71 and the position light bulb 72 will leak into the front cowl 34 through the outer peripheral wall 63 and ensures that the light from each of the flasher bulb 71 and the position light bulb 72 is reflected within the lamp case 50 to efficiently illuminate the lens surface 62a.

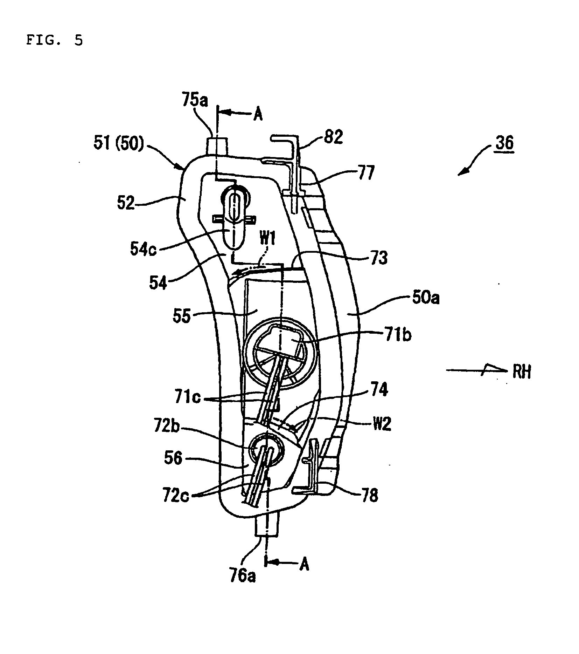

Referring to Figs. 4 to 8, an upper shoulder surface 73 that extends across the upper bottom wall 54 and the middle bottom wall 55 is formed on the bottom portion on a rear surface side of the lamp case 50 (housing main unit 51) by an upper surface on a proximal side of the upper bulkhead 58. The upper shoulder surface 73 is inclined in a rear view so as to be disposed more downwardly on more inner sides in the vehicle width direction. As a result, even with the upper shoulder surface 73 (upper bulkhead 58) inclined downwardly toward the front in a vehicle mounted condition, rainwater or the like does not accumulate on the upper shoulder surface 73 and is drained properly along an inner side of the middle bottom wall 55 (an arrow W1 in Fig. 5 indicates the flow of water at this time).

It should be noted that a lower shoulder surface 74 that extends across the middle bottom wall 55 and the lower bottom wall 56 is formed on the bottom portion on the rear surface side of the lamp case 50 by an upper surface on a proximal side of the lower bulkhead 57. The lower shoulder surface 74 (lower bulkhead 57) is inclined downwardly toward the rear in a vehicle mounted condition, so that rainwater or the like does not accumulate on the lower shoulder surface 74. Because the lower shoulder surface 74 is inclined in a rear view so as to be disposed more downwardly on more outer sides in the vehicle width direction, should the lower shoulder surface 74 be inclined downwardly toward the front, water on the lower shoulder surface 74 is drained properly along an outer side of the lower bottom wall 56 (an arrow W2 in Fig. 5 indicates the flow of water at this time).

The lamp case 50 includes an upper vertical wall 75a and an upper support pin 75 integrally formed on an upper end thereof (an upper end of the lens body 61). Specifically, the upper vertical wall 75a stands upwardly and the upper support pin 75 protrudes forwardly from the upper vertical wall 75a. In addition, the lamp case 50 further includes a lower vertical wall 76a and a lower support pin 76 integrally formed on a lower end thereof (a lower end of the lens body 61). Specifically, the lower vertical wall 76a stands downwardly and the lower support pin 76 protrudes forwardly from the lower vertical wall 76a.

Additionally, an upper fastening wall 77 and a lower fastening wall 78 are integrally formed on the lamp case 50 (housing main unit 51). Specifically, the upper fastening wall 77 that extends substantially orthogonally to the crosswise direction is disposed on an upper end portion of the lamp case 50 (housing main unit 51) on the rear surface side and outside in the vehicle width direction. The lower fastening wall 78 that extends substantially orthogonally to the crosswise direction is disposed on a lower end portion of the lamp case 50 (housing main unit 51) on the rear surface side and outside in the vehicle width direction.

On the other hand, the front side cowl 45 includes upper and lower support portions 75b, 76b and upper and lower fastening portions 77b, 78b integrally formed thereon on an inner surface side thereof. Specifically, the upper and lower support pins 75, 76 can be passed through the upper and lower support portions 75b, 76b, respectively. The upper and lower fastening walls 77, 78 can be fastened to the upper and lower fastening portions 77b, 78b, respectively.
The front flasher 36 can be fixedly attached on the inside of the front side cowl 45 by inserting the upper and lower support pins 75, 76 into the upper and lower support portions 75b, 76b, respectively, from the rear and fastening the upper and lower fastening walls 77, 78 to the upper and lower fastening portions 77b, 78b, respectively, from the inside in the vehicle width direction.

In this condition, referring to Fig. 3, the front flasher 36 is disposed between the headlight 35 and the fuel tank 31 in a side view and so as to overlap the front forks 3 on the outside of the front cowl 34 in the side view. Additionally, at this time, the upper portion of the front flasher 36 is disposed rearwardly of a lower portion of the cowl extension 49 in the side view and each of the flasher bulb 71 and the position light bulb 72 is disposed rearwardly of the front forks 3 in the side view.

The front flasher 36 has an illuminating surface (lens surface 62a) that is, though displaced downwardly and rearwardly from the front end of the front cowl 34, is spaced as far downwardly apart as feasible from the front portion lower surface of the front cowl 34. Even when a first side of an area around the front cowl 34 is viewed from an obliquely forward and upward direction (near a viewpoint of a third person), therefore, light from the front flasher 36 (front position light 36c) on a second side is less likely to be hidden behind the front cowl 34.

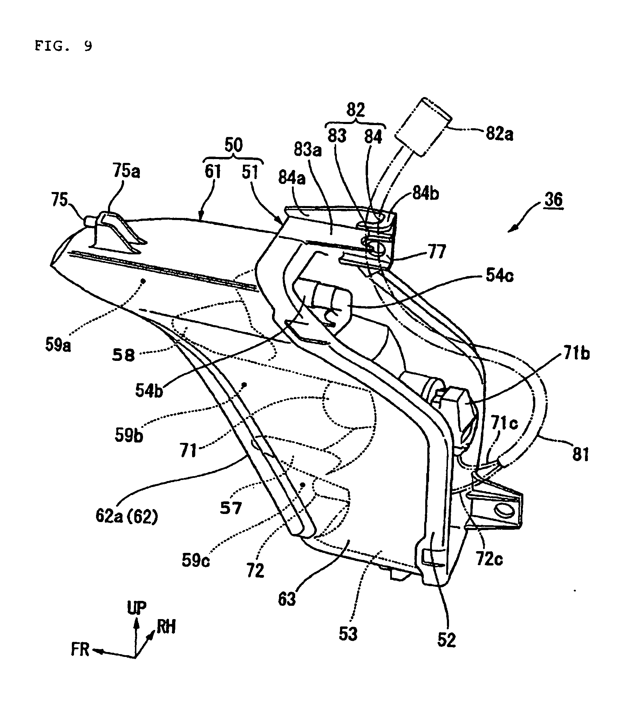

Referring to Fig. 9, power supply harnesses 71c, 72c extending from the bulb sockets 71b, 72b, respectively, are bundled up at a position rearward of the lamp case 50 into a single flasher cable 81. The flasher cable 81 is routed upwardly and held in position by a cable guide 82 that is integrally formed on the upper fastening wall 77 in the rear side at the upper end portion of the lamp case 50. The cable guide 82 includes a lower U-shaped groove 83 and an upper U-shaped groove 84. Specifically, the lower U-shaped groove 83 is formed to open rearwardly at a rear end of a horizontal wall 83a that stands on the inside in the vehicle width direction from an upper portion of the upper fastening wall 77. The upper U-shaped groove 84 that opens forwardly is formed by a hook portion 84b formed on the inside in the vehicle width direction of an upper extension 84a of the upper fastening wall 77.

The flasher cable 81 enters the lower U-shaped groove 83 from the rearward direction and then enters the upper U-shaped groove 84 from the forward direction to be thereby held mildly by the cable guide 82. In this condition, a connector 82a disposed at a leading end side of the flasher cable 81 is pulled upwardly, so that the connector 82a can be connected to a main harness easily.

As described heretofore, the front lighting apparatus structure for the saddle-riding type vehicle in the above-described embodiment of the present invention is applied to the motorcycle 1 that includes the engine 17; the fuel tank 31 disposed upwardly of the engine 17; the handlebar 7; the front cowl 34 for covering forwardly of the fuel tank 31 and the handlebar 7; the headlight 35 disposed at the front end of the front cowl 34; and the front flasher 36 disposed downwardly of the headlight 35 and on the side portion of the front cowl 34. In the motorcycle 1, the front flasher 36 is disposed between the headlight 35 and the fuel tank 31 in a side view and the front flasher 36 includes the flasher bulb 71 and the position light bulb 72 disposed vertically, the position light bulb 72 being disposed downwardly of the flasher bulb 71.
According to the foregoing arrangements, light emitted from the front flasher 36 that is disposed downwardly and rearwardly of the headlight 35 at the front end of the front cowl 34 and the front position light 36c that is continuous downwardly with the front flasher 36 is inhibited from being less visible by the front cowl 34 and is easily visible for the improved conspicuity of the front lighting apparatus. The arrangement in which the front position light 36c is disposed downwardly of the front flasher 36, in particular, helps make the front position light 36c more easily visible.

Additionally, the front flasher 36 is disposed at the front edge of the side portion of the front cowl 34 at a position at which the front flasher 36 crosses the front fork 3 in a side view.
According to the foregoing arrangement, the front flasher 36 and the front position light 36c are illuminated at the front edge of the side portion of the front cowl 34, which even further enhances conspicuity of the front lighting apparatus.

Additionally, the flasher bulb 71 and the position light bulb 72 are disposed rearwardly of the front fork 3.
According to the foregoing arrangement, each of the flasher bulb 71 and the position light bulb 72 is disposed rearwardly of the front fork 3. This allows the bulbs 71, 72 to be spaced apart from the front end of the front cowl 34. As a result, light from each of the bulbs 71, 72 is less likely to be hidden by the front cowl 34, so that the degree of freedom in layout of the front lighting apparatus can be enhanced and conspicuity can be improved.

Additionally, the front flasher 36 has an upper portion thereof extended up to a position near the rear portion of the headlight 35 and a lower portion thereof extended up to a position near an upper portion of the radiator 24 forwardly of the fuel tank 31.
According to the foregoing arrangement, the front flasher 36 can be built as large as possible to thereby enhance conspicuity of the front flasher 36.

Additionally, the lower portion of the front flasher 36 overlaps the side portion of the radiator 24 in a front view.
According to the foregoing arrangement, the front flasher 36 does not protrude outwardly toward the side relative to the radiator 24, which allows the vehicle body width to be narrower. Additionally, a large front flasher 36 can be disposed by making effective use of the dead space between the upper portion of the radiator 24 and the front cowl 34.

Additionally, the headlight 35 has the cowl extension 49 (air duct) disposed at a lower portion thereof and the front flasher 36 is disposed rearwardly of the cowl extension 49.
According to the foregoing arrangement, the front flasher 36 can be cooled by an air flow introduced into the inside of the front cowl 34 through the cowl extension 49 (air duct). The cowl extension 49 does not impair conspicuity of the front flasher 36, either.

Additionally, the front flasher 36 has the lower and upper bulkheads 57, 58 that separate the interior of the front flasher 36 into the upper chamber 59a, the middle chamber 59b, and the lower chamber 59c and the flasher bulb 71 is disposed in the middle chamber 59b and the position light bulb 72 is disposed in the lower chamber 59c.
According to the foregoing arrangement, the front flasher 36 can be built large vertically for greater conspicuity. The arrangements in which the flasher bulb 71 is disposed in the middle chamber 59b and the position light bulb 72 is disposed in the lower chamber 59c, respectively, allows a sufficient gap between the corresponding bulb 71 or 72 and the headlight 35, so that conspicuity of the front flasher 36 and the front position light 36c can be enhanced.

Additionally, the upper chamber 59a has the vent port 54d that provides communication with the outside.
According to the foregoing arrangement, heat from each of the flasher bulb 71 and the position light bulb 72 moves upwardly, so that heat of the flasher bulb 71 and the position light bulb 72 accumulated in the upper chamber 59a can be effectively discharged for improved cooling performance.

Additionally, the front flasher 36 includes the lens body 61, a side portion outer periphery (outer peripheral wall 63) of which has an inner surface coated with dual painting, silver on the inner surface side and black on the outer surface side.
According to the foregoing arrangement, light from each bulb can be prevented from leaking from the side portion outer periphery of the lens body 61, while the bulb's light is reflected into the lamp case 50, which allows the lens surface 62a to be illuminated efficiently.

Additionally, the front flasher 36 includes the middle reflector 55 that has upper shoulder surface 73 disposed on the upper portion rear surface side of the middle reflector 55, the upper shoulder surface 73 being downwardly inclined toward a side of the middle reflector 55, water on the upper portion rear surface being drained through the upper shoulder surface 73.
According to the foregoing arrangement, even with the middle reflector 55 inclined downwardly toward the front, water on the upper portion rear surface can be drained properly through the upper shoulder surface 73.

Additionally, the front flasher 36 includes the lower reflector 56 that has the lower reflecting surface 57a extending upwardly toward the front from an upper portion of the lower reflector 56.
According to the foregoing arrangement, the front flasher 36 can have a large reflecting surface 55a, while the front position light 36c is allowed to have an illuminating area, so that a large illuminating area can be achieved of the front flasher 36.

Additionally, the front flasher 36 includes the housing main unit 51 that has the cable guide 82 for holding the flasher cable 81. The cable guide 82 includes the upper U-shaped groove 84 and the lower U-shaped groove 83 and the flasher cable 81 is guided by being passed between the upper U-shaped groove 84 and the lower U-shaped groove 83.
According to the foregoing arrangement, the flasher cable 81 can be held in position by a simple structure, so that the front flasher 36 can be easily removed or reinstalled.
- 1:: Motorcycle (saddle-riding type vehicle)
- 3:: Front fork
- 7:: Handlebar
- 17:: Engine
- 24:: Radiator
- 31:: Fuel tank
- 34:: Front cowl
- 35:: Headlight
- 36:: Front flasher
- 49:: Cowl extension (air duct)
- 51:: Housing main unit (housing)
- 54d:: Vent port
- 55:: Middle reflector
- 56:: Lower reflector
- 57:: Lower bulkhead (partition wall)
- 57a:: Lower reflecting surface
- 58:: Upper bulkhead (partition wall)
- 59a:: Upper chamber
- 59b:: Middle chamber
- 59c:: Lower chamber
- 61:: Lens body (lens)
- 71:: Flasher bulb
- 72:: Position light bulb
- 73:: Upper shoulder surface (step)
- 81:: Flasher cable
- 82:: Cable guide
- 83:: Lower U-shaped groove
- 84:: Upper U-shaped groove

## Claims

1. A saddle-riding type vehicle with a front lighting apparatus structure, the vehicle comprising:
an engine (17);
a fuel tank (31) disposed upwardly of the engine (17);
a handlebar (7);
**characterized in that** the structure further comprises:
a front cowl (34) for covering forwardly of the fuel tank (31) and the handlebar (7);
a headlight (35) disposed at a front end of the front cowl (34); and
a front flasher (36) disposed downwardly of the headlight (35) and on a side portion of the front cowl (34), wherein:
the front flasher (36) is substantially disposed between the headlight (35) and the fuel tank (31) in a horizontal direction in a side view; and
the front flasher (36) includes a flasher bulb (71) and a position light bulb (72) disposed substantially vertically to each other, the position light bulb (72) being disposed downwardly of the flasher bulb (71).

2. The saddle-riding type vehicle according to claim 1, wherein:
the front flasher (36) is disposed at a front edge of the side portion of the front cowl (34) at a position at which the front flasher (36) crosses a front fork (3) in a side view.

3. The saddle-riding type vehicle according to claim 1 or 2, wherein:
the flasher bulb (71) and the position light bulb (72) are disposed rearwardly of the front fork (3).

4. The saddle-riding type vehicle according to any one of claims 1 to 3, wherein:
the front flasher (36) has an upper portion thereof extended up to a position near a rear portion of the headlight (35) and a lower portion thereof extended up to a position near an upper portion of a radiator (24) forwardly of the fuel tank (31).

5. The saddle-riding type vehicle according to any one of claims 1 to 4, wherein:
the lower portion of the front flasher (36) overlaps a side portion of the radiator (24) in a front view.

6. The saddle-riding type vehicle according to any one of claims 1 to 5, wherein:
the headlight (35) has an air duct (49) disposed at a lower portion thereof; and
the front flasher (36) is disposed rearwardly of the air duct (49).

7. The saddle-riding type vehicle according to any one of claims 1 to 6, wherein:
the front flasher (36) has partition walls (57, 58) that separate an interior of the front flasher (36) into an upper chamber (59a), a middle chamber (59b), and a lower chamber (59c); and
the flasher bulb (71) is disposed in the middle chamber (59b) and the position light bulb (72) is disposed in the lower chamber (59c).

8. The saddle-riding type vehicle according to claim 7, wherein:
the upper chamber (59a) has a vent port (54d) that provides communication with an outside.

9. The saddle-riding type vehicle according to any one of claims 1 to 8, wherein:
the front flasher (36) includes a lens (61), a side portion outer periphery (63) of which has an inner surface coated with dual painting, silver on an inner surface side and black on an outer surface side.

10. The saddle-riding type vehicle according to any one of claims 1 to 9, wherein:
the front flasher (36) includes a middle reflector (55) that has a step (73) disposed on an upper portion rear surface side of the middle reflector (55), the step (73) being downwardly inclined toward a side of the middle reflector (55), water on the upper portion rear surface being drained through the step (73).

11. The saddle-riding type vehicle according to any one of claims 1 to 10, wherein:
the front flasher (36) includes a lower reflector (56) that has a lower reflecting surface (57a) extending upwardly toward a front from an upper portion of the lower reflector (56).

12. The saddle-riding type vehicle according to any one of claims 1 to 11, wherein:
the front flasher (36) includes a housing (51) that has a cable guide (82) for holding a flasher cable (81).

13. The saddle-riding type vehicle according to claim 12, wherein:
the cable guide (82) includes an upper U-shaped groove (84) and a lower U-shaped groove (83); and
the flasher cable (81) is guided by being passed between the upper U-shaped groove (84) and the lower U-shaped groove (83).

## Patentansprüche

1. Fahrzeug vom Sattelfahrtyp mit einer Frontlichtgerätekonstruktion, wobei das Fahrzeug aufweist:
einen Motor (17);
einen Kraftstofftank (31), der oberhalb des Motors (17) angeordnet ist;
einen Lenker (7);
**gekennzeichnet dadurch, dass** die Konstruktion weiterhin aufweist,
eine Frontverkleidung (34) zum Abdecken vorderhalb des Kraftstofftanks (31) und des Lenkers (7);
einen Scheinwerfer (35), der an dem vorderen Ende der Frontverkleidung (34) angeordnet ist; und
einen vorderen Blinker (36), der unterhalb des Scheinwerfers (35) und an einem seitlichen Abschnitt der Frontverkleidung (34) angeordnet ist, wobei:
der Frontblinker (36) in einer Seitenansicht im Wesentlichen zwischen dem Scheinwerfer (35) und dem Kraftstofftank (31) in einer horizontalen Richtung angeordnet ist; und
der Frontblinker (36) eine Blinklichtbirne (71) und eine Positionslichtbirne (72) umfasst, die im Wesentlichen vertikal zueinander angeordnet sind, wobei die Positionslichtbirne (72) unterhalb der Blinklichtbirne (71) angeordnet ist.

2. Fahrzeug vom Sattelfahrtyp gemäß Anspruch 1, wobei:
der Frontblinker (36) an einem vorderen Rand des Seitenabschnitts der Frontverkleidung (34) an einer Position angeordnet ist, an der der Frontblinker (36) eine Vordergabel (3) in einer Seitenansicht schneidet.

3. Fahrzeug vom Sattelfahrtyp gemäß Anspruch 1 oder 2, wobei:
die Blinklichtbirne (71) und die Positionslichtbirne (72) hinter der Vordergabel (3) sind.

4. Fahrzeug vom Sattelfahrtyp gemäß einem der Ansprüche 1 bis 3, wobei:
der Frontblinker (36) einen oberen Abschnitt hat, der sich zu einer Position nahe einem hinteren Abschnitt des Scheinwerfers (35) erstreckt und der einen unteren Abschnitt hat, der sich zu einer Position nahe einem oberen Abschnitt eines Kühlers (24) vorderhalb des Kraftstofftanks (31) erstreckt.

5. Fahrzeug vom Sattelfahrtyp gemäß einem der Ansprüche 1 bis 4, wobei:
der untere Abschnitt des Frontblinkers (36) einen seitlichen Abschnitt des Kühlers (24) in einer Frontansicht überlappt.

6. Fahrzeug vom Sattelfahrtyp gemäß einem der Ansprüche 1 bis 5, wobei:
der Scheinwerfer (35) einen Luftkanal (49) hat, der an einem unteren Abschnitt davon angeordnet ist; und der Frontblinker (36) hinter dem Luftkanal (49) angeordnet ist.

7. Fahrzeug vom Sattelfahrtyp gemäß einem der Ansprüche 1 bis 6, wobei:
der Frontblinker (36) Trennwände (57, 58) hat, die ein Inneres des Frontblinkers (36) in eine obere Kammer (59a), eine mittlere Kammer (59b) und eine untere Kammer (59c) unterteilen; und
die Blinklichtbirne (71) in der mittleren Kammer (59b) angeordnet ist und die Positionslichtbirne (72) in der unteren Kammer (59c) angeordnet ist.

8. Fahrzeug vom Sattelfahrtyp gemäß Anspruch 7, wobei:
die obere Kammer (59a) eine Belüftungsöffnung (54d) hat, die eine Verbindung mit einer Außenseite herstellt.

9. Fahrzeug vom Sattelfahrtyp gemäß einem der Ansprüche 1 bis 8, wobei:
der Frontblinker (36) eine Linse (61) umfasst, ein Seitenabschnitt deren äußeren Randbereichs (63) eine innere Oberfläche hat, die mit einem zweifachen Anstrich beschichtet ist, Silber auf einer inneren Oberfläche und Schwarz an einer äußeren Oberflächenseite.

10. Fahrzeug vom Sattelfahrtyp gemäß einem der Ansprüche 1 bis 9, wobei:
der Frontblinker (36) einen mittleren Reflektor (55) hat, der eine Stufe (73) hat, die an einer oberen Flächenseite eines oberen Abschnitts des mittleren Reflektors (55) angeordnet ist, die Stufe (73) auf eine Seite des mittleren Reflektors (55) zu abwärtsgeneigt ist, wodurch Wasser auf einer hinteren Fläche des oberen Abschnitts über die Stufe (73) abläuft.

11. Fahrzeug vom Sattelfahrtyp gemäß einem der Ansprüche 1 bis 10, wobei:
der Frontblinker (36) einen unteren Reflektor (56) aufweist, der eine untere reflektierende Fläche (57a) aufweist, die von einem oberen Abschnitt des unteren Reflektors (56) auf die Front zu sich nach oben erstreckt.

12. Fahrzeug vom Sattelfahrtyp gemäß einem der Ansprüche 1 bis 11, wobei:
der Frontblinker (36) ein Gehäuse (51) hat, das eine Kabelführung (52) zum Halten des Blinkerkabels (81) aufweist.

13. Fahrzeug vom Sattelfahrtyp gemäß Anspruch 12, wobei:
die Kabelführung (82) eine obere U-förmige Nut (84) und eine untere U-förmige Nut (83) umfasst; und
das Blinkerkabel (81) geführt wird, indem es zwischen der oberen U-förmigen Nut (84) und der unteren U-förmigen Nut (83) geführt ist.

## Revendications

1. Véhicule de type à selle avec une structure d'appareil d'éclairage avant, la véhicule comprenant :
un moteur (17) ;
un réservoir de carburant (31) disposé au-dessus du moteur (17) ;
un guidon (7) ;
**caractérisé en ce que** la structure comprend en outre :
un auvent avant (34) pour couvrir à l'avant du réservoir de carburant (31) et le guidon (7) ;
un phare (35) disposé sur l'extrémité avant de l'auvent avant (34) ; et
un clignotant avant (36) disposé en dessous du phare (35) et sur une portion latérale de l'auvent avant (34), dans lequel :
le clignotant avant (36) est disposé sensiblement entre le phare (35) et le réservoir de carburant (31) dans une direction horizontale en vue de côté ; et
le clignotant avant (36) comprend une ampoule clignotante (71) et une ampoule de feu de position (72) disposées sensiblement verticalement l'une par rapport à l'autre, l'ampoule de feu de position (72) étant disposée en dessous de l'ampoule clignotante (71).

2. Véhicule de type à selle selon la revendication 1, dans lequel :
le clignotant avant (36) est disposé sur un bord avant de la portion latérale de l'auvent avant (34) en une position à laquelle le clignotant avant (36) traverse une fourche avant (3) en vue de côté.

3. Véhicule de type à selle selon la revendication 1 ou 2, dans lequel :
l'ampoule clignotante (71) et l'ampoule de feu de position (72) sont disposées à l'arrière de la fourche avant (3).

4. Véhicule de type à selle selon l'une quelconque des revendications 1 à 3, dans lequel :
le clignotant avant (36) a une de ses portions supérieures étendue jusqu'à une position près d'une position arrière du phare (35) et une de ses positions inférieures étendue jusqu'à une position près d'une portion supérieure d'un radiateur (24) à l'avant du réservoir de carburant (31).

5. Véhicule de type à selle selon l'une quelconque des revendications 1 à 4, dans lequel :
la portion inférieure du clignotant avant (36) chevauche une portion latérale du radiateur (24) en vue avant.

6. Véhicule de type à selle selon l'une quelconque des revendications 1 à 5, dans lequel :
le phare (35) a une conduite d'air (49) disposée sur une de ses portions inférieures ; et
le clignotant avant (36) est disposé à l'arrière de la conduite d'air (49).

7. Véhicule de type à selle selon l'une quelconque des revendications 1 à 6, dans lequel :
le clignotant avant (36) a des cloisons (57, 58) qui séparent un intérieur du clignotant avant (36) en une chambre supérieure (59a), une chambre intermédiaire (59b) et une chambre inférieure (59c) ; et
l'ampoule clignotante (71) est disposée dans la chambre intermédiaire (59b) et l'ampoule de feu de position (72) et disposée dans la chambre inférieure (59c).

8. Véhicule de type à selle selon la revendication 7, dans lequel :
la chambre supérieure (59a) a un évent (54d) qui fournit une communication avec l'extérieur.

9. Véhicule de type à selle selon l'une quelconque des revendications 1 à 8, dans lequel :
le clignotant avant (36) comprend une lentille (61), dont une périphérie externe de portion latérale (63) a une surface interne revêtue d'une double peinture, argent sur un côté de surface interne et noir sur un côté de surface externe.

10. Véhicule de type à selle selon l'une quelconque des revendications 1 à 9, dans lequel :
le clignotant avant (36) comprend un réflecteur intermédiaire (55) qui a un étage (73) disposé sur un côté de surface arrière de portion supérieure du réflecteur intermédiaire (55), l'étage (73) étant incliné vers le bas vers un côté du réflecteur intermédiaire (55), l'eau sur la surface arrière de portion supérieure étant évacuée à travers l'étage (73).

11. Véhicule de type à selle selon l'une quelconque des revendications 1 à 10, dans lequel :
le clignotant avant (36) comprend un réflecteur inférieur (56) qui a une surface réfléchissante inférieure (57a) s'étendant vers le haut vers l'avant depuis une portion supérieure du réflecteur inférieur (56).

12. Véhicule de type à selle selon l'une quelconque des revendications 1 à 11, dans lequel :
le clignotant avant (36) comprend un logement (51) qui a un guide câble (82) pour maintenir un câble de clignotant (81).

13. Véhicule de type à selle selon la revendication 12, dans lequel :
le guide câble (82) comprend une rainure supérieure en U (84) et une rainure inférieure en U (83) ; et
le câble de clignotant (81) est guidé en étant passé entre la rainure supérieure en U (84) et la rainure inférieure en U (83).
